# EUROPEAN PATENT APPLICATION

(11) **EP 2 752 228 A1**
(43) Date of publication of application: **09.07.2014**
(21) Application number: 12826858.8
(22) Date of filing: 23.07.2012
(51) Int. Cl.: B01D 33/06, B63B 13/00, C02F 1/00

(54) **BALLAST WATER TREATMENT DEVICE AND BALLAST WATER TREATMENT METHOD**

(30) Priority: 30.08.2011 JP 2011187000
(71) Applicant: Sumitomo Electric Industries, Ltd., Osaka-shi, Osaka 541-0041 (JP)
(72) Inventor: OZAWA, Isao, Osaka-shi Osaka 554-0024 (JP); UEYAMA, Munetsugu, Osaka-shi Osaka 554-0024 (JP); NAKAI, Ryusuke, Osaka-shi Osaka 554-0024 (JP)
(74) Representative: Boult Wade Tennant
(86) International application number: PCT/JP2012/068558
(87) International publication number: WO 2013/031425

(57) **Abstract**

A ballast water treatment apparatus includes a filter that is cylindrically formed so as to surround an axis, a case that includes an outer cylindrical portion that is disposed so as to surround the filter, a rotation mechanism that rotates the filter around the axis, an untreated water nozzle that ejects untreated water to a filter-surrounding region that is defined by an outer peripheral surface of the filter and the outer cylindrical portion, a cleaning water nozzle that ejects cleaning water toward the outer peripheral surface of the filter, a filtered water channel through which filtered water that has passed through the filter flows from a region inside the filter to outside of the case, and a discharge channel through which discharged water that has not passed through the filter is discharged from the filter-surrounding region to outside of the case.

## Description

### Technical Field

The present invention relates to a system for treating ballast water that is stored in a ship such as an oil tanker in order to stabilize the ship when the ship is underway. In particular, the present invention relates to a ballast water treatment apparatus that is mounted in a ship and that is used to remove microorganisms from sea water.

### Background Art

In recent years, treatment of ballast water stored in a ship has become an issue. Ballast water is sea water that is stored in a ship in order to enable the ship to navigate safely even if the ship is unladen. Ballast water is taken into a ship from a sea area near a port when the ship leaves the port and is discharged to the ocean when the ship enters a port and is loaded with cargo. When ballast water is discharged to a sea area that is different from a sea area from which the ballast water was originally taken, organisms in sea water are transferred to a sea area that is not their native habitat and may have a significant effect on marine ecosystems.

Therefore, various methods for purifying ballast water to remove, kill, or inactivate microorganisms have been examined. For example, PTL 1 describes a method for killing aquatic organisms by heating sea water. PTL 2 discloses a method using steam, a method using ultraviolet irradiation, electrical methods using voltage application and an impact wave, a method using a chemical agent such as sodium hypochlorite, and the like. Filtration methods have been also examined as pretreatment before performing killing treatments described above or in order to remove comparatively large microorganisms. For example, PTL 3 discloses a process for producing ballast water by using a membrane filter.

### Citation List

### Patent Literature

PTL 1: Japanese Patent No. 3660984
PTL 2: Japanese Patent No. 4261955
PTL 3: Japanese Unexamined Patent Application Publication No. 2006-728

### Summary of Invention

### Technical Problem

Existing ballast water treatment methods each have their own demerits. For example, a method using heat has a demerit in that it is difficult to obtain energy for heating and it is difficult to completely kill microflora such as microorganisms. A method using electrical means also has a demerit in that it is difficult to completely kill microflora such as microorganisms and a large amount of electric power is necessary. A method using a chemical agent requires a chemical agent of high-concentration and has a problem of, for example, neutralizing discharged water. A method using an ultraviolet lamp can be used comparatively effectively. However, this method has a problem of high installment cost because it is necessary to use a large number of lamps in order to completely kill microflora such as microorganisms. A method using a membrane filter requires a membrane having very small pores. Therefore, it takes a long time to perform filtration and it is necessary to clean the membrane using water to remove clogs, so that this method is not a practical way of treating a large amount of sea water.

As described above, although various methods for treating ballast water have been examined, a definitive method has not been developed and further improvements on such methods are required. It is an object of the present invention to provide a ballast water treatment apparatus for a ship that can be mounted in a ship and that can efficiently filter out suspended particles and microorganisms from ballast water that is to be discharged from the ship or taken on board the ship.

### Solution to Problem

The inventors achieved the present invention in order to address new problems while developing a ballast water treatment apparatus that can be mounted in a ship, that can efficiently purify ballast water, and that uses, in particular, a filtration method.

According to a first aspect of the present invention, a ballast water treatment apparatus includes a filter that is cylindrically formed so as to surround an axis, a case that includes an outer cylindrical portion that is disposed so as to surround the filter, a rotation mechanism that rotates the filter around the axis, an untreated water nozzle that ejects untreated water to a filter-surrounding region that is defined by an outer peripheral surface of the filter and the outer cylindrical portion, a cleaning water nozzle that ejects cleaning water toward the outer peripheral surface of the filter, a filtered water channel through which filtered water that has passed through the filter flows from a region inside the filter to outside of the case, and a discharge channel through which discharged water that has not passed through the filter is discharged from the filter-surrounding region to outside of the case (Claim 1).

The inventors examined a new ballast water treatment apparatus that uses a method in which untreated water is ejected toward the outer peripheral surface of a filter that is cylindrically formed and filtered water is taken from inside of the cylinder. Such an apparatus is characterized in that filtration is performed while obtaining an effect of cleaning the filter by ejecting untreated water toward the outer peripheral surface of the filter. However, in order to continuously operate an apparatus having this structure, it is necessary to constantly eject more than a certain amount of water per unit time from an untreated water nozzle toward the filter surface so that the filter can be cleaned. Therefore, it has been difficult to appropriately perform operation control in a case where, for example, only a small amount of water needs to be treated.

According to the aspect of the present invention, the untreated water nozzle does not have a cleaning effect, and a cleaning effect is obtained by using the cleaning water nozzle, which is a different nozzle. Therefore, the untreated water nozzle may eject an amount of water that needs be treated, while cleaning of the filter surface can be continuously performed by using the cleaning water nozzle.

In the aspect described above, sea water that is subjected to treatment is not particularly limited. In general, sea water in a port, in which ships are at anchor, includes microorganisms and suspended particles and has a turbidity in the range of about 1 to 100 turbidity unit. Examples of harmful microorganisms in sea water include Escherichia coli; Vibrio cholerae; Enterococcus; and larvae of plankton such as water flea, asteroidean, and seaweed. The sizes of these organisms are mostly in the range of 0.3µm to several µm. A filter is used to remove suspended particles and microorganisms from sea water. A filter made of a material having a relatively high strength, such as a non-woven cloth or polyester, can be used. Suspended particles to be removed include non-organic components, such as silica, and have various sizes. It is required that microorganisms and suspended particles having a size of 10 µm or more be removed from ballast water. As long as the filter is capable of removing such substances, the material of the filter is not particularly limited. The larger the thickness of the filter, the smaller the flow rate of water that is filtered. If the thickness is too small, the filter is more likely to tear. Therefore, it is preferable that the thickness be in the range of 0.1 mm to 1 mm, although the thickness depends on the material.

The rotation mechanism is not particularly limited, and a general electric motor can be used. Alternatively, water flow itself may be used to rotate the filter, or a rotation mechanism may be rotated by a force generated by another driving system. In order to obtain a certain level of treatment flow rate, it is preferable that the number of revolutions per unit time be in the range of 20 to 150 rpm. If the number of revolutions per unit time is less than 20 rpm, it is difficult to achieve treatment performance of 5 ton/hour, which is the least amount that is required to be treated. On the other hand, if the number of revolutions per unit time is greater than 150 rpm, it is necessary to supply untreated water with an excessively high pressure so that the water can be filtered against an effect of a centrifugal force of the rotation. For example, in order to obtain a treatment rate of 20 ton/hour, it is preferable that the number of revolutions per unit time be in the range of 30 to 80 rpm.

It is preferable that the ballast water treatment apparatus further include a water intake channel through which cleaning water is taken from the filter-surrounding region or from the discharge channel and a circulation channel through which the cleaning water is supplied to the cleaning water nozzle (Claim 2).

That is, untreated water that was supplied to the filter but was discharged without being filtered is circulated to the cleaning water nozzle and can be used. A pump for circulating water is disposed in the circulation channel, and, irrespective of the treatment rate of untreated water, an amount of untreated water that is necessary for cleaning can be ejected from the cleaning water nozzle as cleaning water. Any specific structure may be used as long as a necessary amount of cleaning water can be supplied to the cleaning water nozzle irrespective of the amount of water that is filtered. For example, additional untreated water may be supplied to the circulation channel. The technology, with which another channel is provided in order to return a part of discharged water to such a position that the discharged water can be used as untreated water and use the discharged water again as untreated water, is called a cross-flow technology. A water intake channel may be provided in order to take cleaning water from such a channel for cross flow.

It is preferable that a nozzle opening of the untreated water nozzle be oriented in such a direction that the untreated water is ejected in a direction that does not intersect the outer peripheral surface of the filter (Claim 3). This is because it is not necessary that the untreated water nozzle have an effect of cleaning the filter. Because the nozzle opening may be oriented in any of such directions that the untreated water is not directly ejected toward the filter, fluid resistance can be more freely designed and a system for enabling operation with any amount of untreated water can be more easily designed.

It is preferable that a nozzle opening of the cleaning water nozzle be oriented in such a direction that the cleaning water is ejected substantially in a direction to a cylindrical surface of the filter (Claim 4). This is because the cleaning effect can be increased.

It is preferable that the filter be a pleated filter having a pleated shape that is folded in a cylinder radial direction (Claim 5).

This is because effective filtration area of the filter can be increased. A ballast water treatment apparatus is typically mounted in a ship and is characterized in that the apparatus is used to filter a large amount of water, which is in the range of several tens to several hundreds of liters per minute. For this purpose, it is required that the apparatus have such a structure that the ratio of the filtration area of the filter to the footprint of the apparatus can be efficiently increased and the size of the apparatus can be reduced.

"Pleated shape" means a shape that is obtained by making a large number of folds on a cylindrical filter surface so that protrusions and recesses are alternately arranged. It is preferable that the depth of pleats and the number of pleats of the pleated shape be greater in order to increase the area. However, the depth of pleats and the number of pleats of the pleated shape influence the degree of clogging and ease with which cleaning can be performed. For a cylindrical filter having a diameter in the range of about 100 to 800 mm, it is preferable that the depth of pleats be in the range of 30 to 150 mm and more preferably 50 mm or greater. It is preferable that the number of pleats be in the range of 100 to 500. A larger depth of pleats and a larger number of pleats are preferable, because the area is increased. However, an excessively large depth is not preferable, because it becomes difficult to clean the filter.

It is preferable that a nozzle opening of the cleaning water nozzle be an oblong opening that has a long side extending in a direction of the axis (Claim 6).

Untreated water can be ejected toward the entire length of the filter in the axial direction. Thus, the entirety of the filter can be effectively used and can be efficiently cleaned. For this purpose, it is preferable that the length of the long side of the oblong opening be substantially the same as the length of the filter in the axial direction. This is because the entire surface of the filter can be effectively cleaned. It is not necessary that these lengths be exactly the same, and it is only necessary that the oblong opening be configured so that ejected untreated water can reach the entire surface of the filter. Here, "oblong opening" means an elongated opening having a long side and a short side. The oblong opening, which is typically a substantially rectangular opening, may be an oval opening having arc-shaped short sides or an elliptic opening.

In the case where the filter has a pleated shape and the nozzle opening is an oblong opening, it is preferable that the ratio of the length of the short side of the opening to the pleat pitch of the pleated filter be less than three. The pleat pitch is the average of the distances between the vertices of adjacent protrusions, which protrude outward from the cylinder. That is, when pleats are made with the same distance therebetween, the pleat pitch is calculated by dividing the perimeter around the protrusions by the number of protrusions. If the ratio of the length of the short side of the nozzle opening to the pleat pitch becomes three, an effect of cleaning the filter using water flow cannot be sufficiently obtained. It is preferable the ratio of the length of the short side of the opening to the pleat pitch be 1/2 or greater. When the length of the short side is reduced so that the ratio becomes less than 1/2, the supply pressure of untreated water becomes relatively high or the supply amount of water relative to the pressure decreases. As a result, it is necessary to use a large pump, and disadvantages such as increase in electric power consumption occur. The effect of cleaning the filter is higher in a case where the length of the short side is greater than or equal to the pleat opening than in a case where the length of the short side is less than the pleat opening. This is particularly effective when the opening is an oblong opening.

It is more preferable that the filter be provided in a plurality, and the plurality of filters be arranged so as to be coaxial with each other (Claim 7).

The installation area of a shipboard apparatus is considerably limited. It is required for a shipboard water treatment apparatus to have a minimal footprint as compared with a general water treatment apparatus placed on the ground. A larger filter area can be obtained by using a plurality of filters. By disposing a plurality of cylindrical filters on multiple levels in the vertical direction so as to be coaxial with each other, the effective filtration area of the filters for the same footprint can be increased by the number of the multiple levels. By connecting the plurality of filters, which are disposed so as to be coaxial with each other, to the rotation shaft of the same motor as a rotation mechanism, the number of rotation mechanisms and the installation space can be saved and it is possible to obtain a large filter area while simplifying the structure of the entire apparatus.

The present invention also provides a ballast water treatment method of filtering ballast water by using any one of the ballast water treatment apparatuses described above (Claim 8).

### Advantageous Effects of Invention

The invention described above can provide a ballast water treatment apparatus that can be mounted in a ship and that can efficiently filter out suspended particles and microorganisms from ballast water that is to be discharged from the ship or taken on board the ship.

### Brief Description of Drawings

[Fig. 1] Figure 1 is a schematic longitudinal sectional view showing the structure of a ballast water treatment apparatus according to the present invention.
[Fig. 2] Figure 2 is a sectional view taken along line A-A of Fig. 1.
[Fig. 3] Figure 3 is a perspective view showing the structure of a pleated filter that is used in the present invention.
[Fig. 4] Figure 4 is a schematic longitudinal sectional view showing the structure of a ballast water treatment apparatus according to another embodiment of the present invention.
[Fig. 5] Figure 5 is a sectional view taken along line A-A of Fig. 4.
[Fig. 6] Figure 6 is a schematic longitudinal sectional view showing the structure of a ballast water treatment apparatus according to still another embodiment of the present invention.
[Fig. 7] Figure 7 shows an example of a rectangular nozzle opening of a cleaning water nozzle.
[Fig. 8] Figure 8 shows the relationship between the dimensions of a pleated shape of a filter and a cleaning water nozzle.

### Reference Signs List

- 1, 1a, 1b: filter
- 2, 2a, 2b: cleaning nozzle
- 21: nozzle opening
- 3: case
- 31: outer cylindrical portion
- 32: cover portion
- 33: bottom portion
- 4, 4a, 4b: central pipe
- 6: cleaning water channel
- 61: water intake pipe
- 62: circulation channel
- 63: pump
- 64: flowmeter
- 7, 7a, 7b: filtered water channel
- 8: discharge channel
- 9: untreated water channel
- 90: untreated water nozzle
- 91: nozzle opening
- 100: motor
- 101: shaft
- 102: motor cover

### Description of Embodiments

The structure of a ballast water treatment apparatus for a ship according to the present invention will be described with reference to the drawings. Elements shown in different drawings and having the same numerals are the same as each other or similar to each other. The present invention is not limited to these, is described in the claims, and includes all modifications within the spirit and scope of the claims and the equivalents thereof.

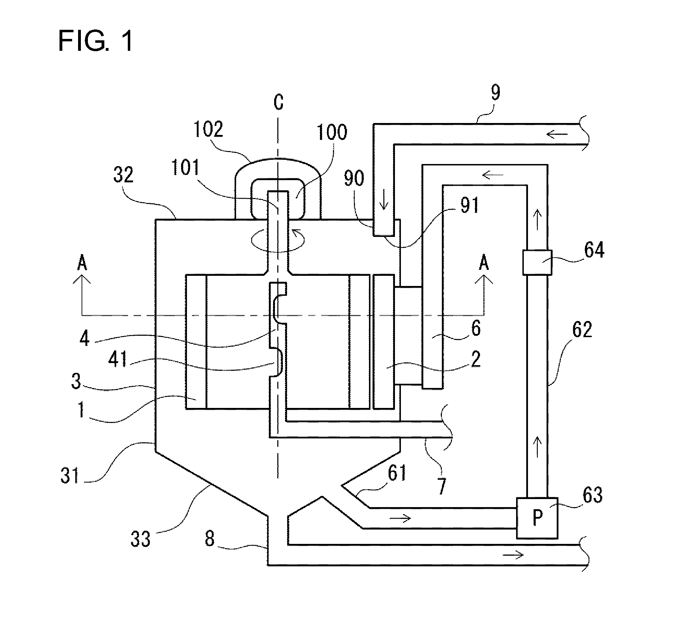

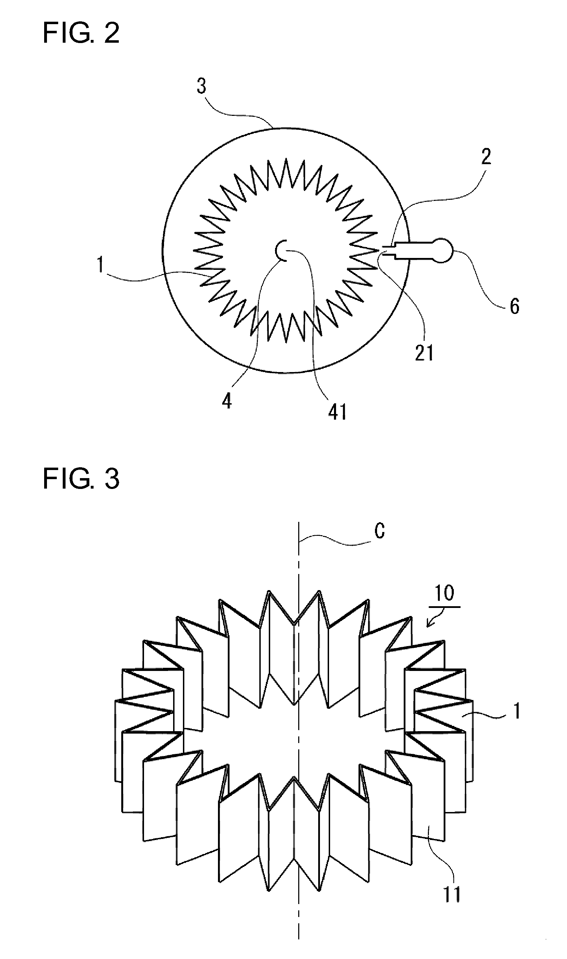

Figure 1 is a schematic longitudinal sectional view showing a ballast water treatment apparatus for a ship according to an embodiment of the present invention. Figure 2 is a sectional view taken along line A-A of Fig. 1. A cylindrical filter 1 is disposed so as to surround an axis C, which serves as the center of rotation. The filter 1 is attached so as to be freely rotatable around a central pipe 4 (that does not rotate and) that is disposed at the center. In Fig. 1, the filter 1 is a pleated filter having folds that are formed so that protrusions and recesses are alternately arranged in the radial direction of the cylinder. The upper and lower sides of the filter are closed so as to be watertight. It is necessary that a rotatable attachment structure be also watertight, but the attachment structure is not particularly limited and a known structure is used. A case 3 covers the entirety of the filter. The case 3 includes an outer cylindrical portion 31, a cover portion 32, and a bottom portion 33. A discharge channel 8 is connected to the bottom portion 33. Sea water, which corresponds to untreated water, flows into the case 3 through an untreated water channel 9 and an untreated water nozzle 90. The untreated water nozzle 90 extends from the untreated water channel 9 so that a nozzle opening 91 thereof is disposed in the case 3. Untreated water is ejected from the nozzle opening 91 and enters a filter-surrounding region.

A part of untreated water is filtered by the filter, and the filtered water enters inside of the cylinder of the filter. In the drawings, the members are schematically illustrated for ease of understanding the structure in the case. In practice, the dimensions and the detailed structures of the members are designed in accordance with a required performance such as the amount of water to be treated. Untreated water that is not filtered and suspended particles that have settled in the case are successively discharged through the discharge channel 8 in the bottom portion of the case. Thus, the present apparatus is also characterized in that it performs filtration while continuously and constantly discharging suspended particles and untreated water that is not filtered. This is effective in increasing the treatment rate to a range of 10 to 20 ton/hour, which is required for treating ballast water, and further to a level of 100 ton/hour or more. Although valves and the like in the discharge channel are not shown in the drawings, devices that are necessary for maintenance or for adjusting flow rate may be provided. Filtered water that is filtered by the filter 1 is guided to a filtered water channel 7 through a water intake hole that is formed in the central pipe 4, and flows to outside of the case.

During the operation described above, suspended particles adhere to the outer peripheral surface of the filter 1. Therefore, it is necessary to replace or clean the filter in order to continue operation for a long time. In the present structure, the nozzle opening 91 of the untreated water nozzle 90 is oriented in such a direction that untreated water is discharged in a direction that does not intersect the outer peripheral surface of the filter. Therefore, it is not expected that untreated water directly impact on the surface of the filter and have a cleaning effect. For this reason, the present structure further includes a cleaning nozzle 2. The cleaning nozzle 2 extends through the outer cylindrical portion 31 of the case 3 so that a nozzle opening 21 thereof faces the filter surface. Description will be made with reference to Fig. 1. Untreated water that has not been filtered is taken through a water intake pipe 61 that is connected to a part of the case 3, and the untreated water is used as cleaning water. A pump 63 supplies the cleaning water to a cleaning water channel 6 through a circulation channel 62. It is preferable that a flowmeter 64 be disposed in a pipe and be used to control the rate of flow that is generated by the pump 63. The cleaning water channel 6 is connected to the cleaning water nozzle 2, which extends through the outer cylindrical portion 31 of the case.

Figure 2 is a sectional view taken along line A-A of Fig. 1. Referring to Fig. 2, the filter 1, which is a pleated filter, is disposed in the outer cylindrical portion 31 of the case, and the central pipe 4 is disposed at the center of the cylinder. The cleaning nozzle 2 extends through the outer cylindrical portion 31 so as to face the outer peripheral surface of the cleaning water filter. In the present example, the cleaning nozzle 2 is oriented in such a direction that cleaning water is ejected substantially in a direction to the cylindrical surface of the filter 1. That is, the nozzle is oriented toward the center of the cylinder. Cleaning water is ejected from the nozzle opening 21 toward the outer peripheral surface of the filter 1. Cleaning water impacts on the outer peripheral surface of the filter, so that the filter 1 is cleaned.

In the structure described above, the filter 1 is rotated by a motor 100. That is, the motor 100 is disposed so that a shaft 101 thereof is coaxial with the central axis C of the filter, and the motor 100 actively rotates the filter 1. Because the motor 100 rotates the filter 1, it is possible to continue filtration using the entire outer peripheral surface of the filter while the filter surface is successively cleaned using cleaning water. There is an additional merit in that the rotation speed can be freely set and changed. The motor 100 is covered by a motor cover 102 and driven by electric power supplied from a driving control unit (not shown). The number of revolutions of the motor 100 per unit time may be constant or appropriately changed by a user. It is more preferable that the number of revolutions be controlled in accordance with the conditions of filtration. Detectors for detecting the conditions, the flow rate, and the like of filtered water may be provided, and control may be performed so as to change the number of revolutions per unit time in accordance with detected information. To be specific, examples of detectors for filtered water include a detector for detecting the flow rate of filtered water, a detector for detecting the pressure of filtered water, and a turbidity detector.

Figure 3 is a perspective view showing a typical structure of a pleated filter that is preferably used in the present invention. This filter is made by folding a flat strip-shaped substrate so as to form a pleated shape by alternately forming protrusions and recesses and connecting ends of the strip to each other so as to form a cylindrical shape. In Fig. 3, untreated water, which is to be filtered, is supplied from outside of a cylindrical pleated filter 10, and a liquid that has been filtered by the filter 1 is discharged from inside of the cylinder.

A porous resin sheet is used as the substrate of the filter. A porous structure such as a stretched porous body, a porous body by phase separation, or a non-woven cloth, which are made of, for example, polyester, nylon, polyethylene, polypropylene, polyurethane, polytetrafluoroethylene (PTFE), and polyvinylidene fluoride (PVdF) may be used. Because ballast water treatment is performed at a high flow rate, a non-woven cloth made of polyester, such as polyethylene terephthalate, is particularly preferably used. The dimensions of a pleated filter that is used in a ballast water treatment apparatus for treating 100 ton/hour may be, for example, as follows: the outside diameter of the pleated filter is 700 mm, the length of the filter in the axial direction is 320 mm, the height of an effective area is 280 mm, the depth of pleats is 70 mm, and the number of pleats is 420.

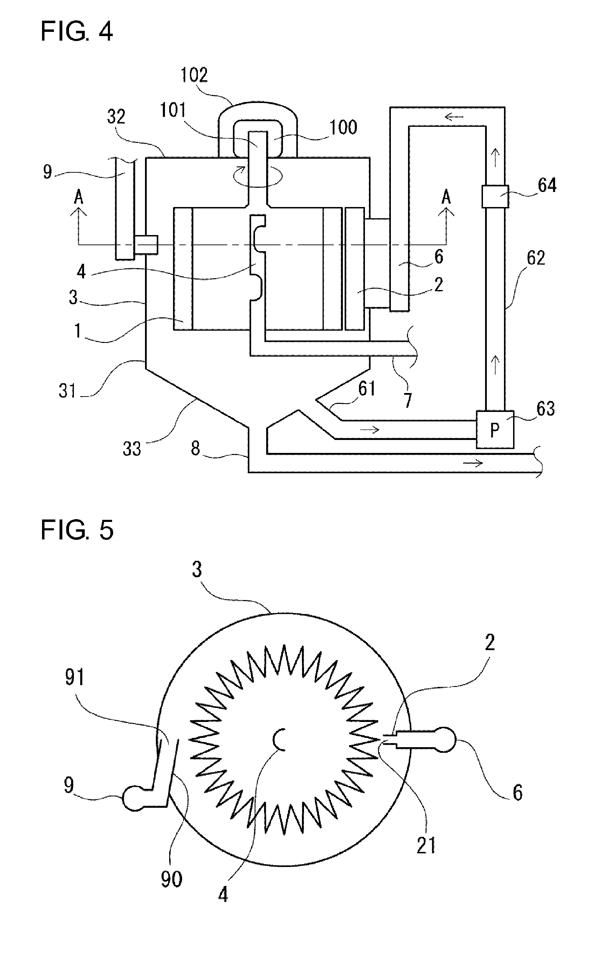

Figure 4 shows a ballast water treatment apparatus according to another embodiment of the present invention. Figure 5 is a sectional view taken along line A-A of Fig. 4. Figure 4 differs from Fig. 1 in the structure of the untreated water nozzle. In the structure shown in Figs. 4 and 5, the untreated water nozzle 90 extends from the untreated water channel 9 and has the nozzle opening 91 inside the case 3. In the present structure, the nozzle opening 91 is oriented in the circumferential direction of the filter 1. This structure differs from the untreated water nozzle opening 91 shown in Fig. 1, which is oriented in substantially the axial direction of the filter. In each of these structures, the untreated water nozzle is independent of the cleaning water nozzle, and it is not expected that ejection of the untreated water nozzle itself have an effect of cleaning the filter. Therefore, the untreated water nozzle may be oriented in any appropriate direction and the flow rate of water therein can be freely controlled. It is preferable that the nozzle opening 91 of the untreated water nozzle 90 be oriented so that untreated water is ejected in a direction that does not intersect the outer peripheral surface of the filter 1. In this case, operation control can be freely performed because the cleaning effect and the flow rate of untreated water can be considered completely separately and ejection of untreated water does not affect the rotation of the filter and the like.

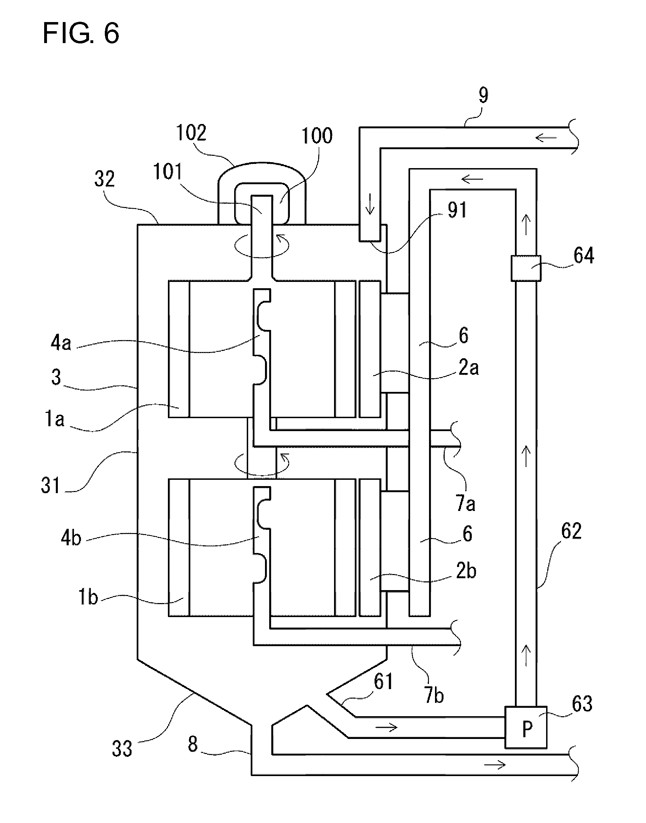

Referring to Fig. 6, a ballast water treatment apparatus according to still another embodiment of the present invention will be described. The ballast water treatment apparatus shown in Fig. 6 includes a plurality of filters that are disposed so as to be coaxial with each other. In this example, two filters are used and the case is common to both filters. Alternatively, there may be a plurality of cases.

A filter 1a and a filter 1b, each having a cylindrical shape, are disposed so as to surround a common axis (not shown), which serves as a rotation center. The filters 1a and 1b are attached so as to be freely rotatable respectively around a central pipe 4a and a central pipe 4b, which are disposed at the centers thereof. As in the case of Fig. 1, pleated filters are shown as examples of the filters. The upper and lower sides of each of the filters are closed so as to be watertight. It is necessary that a rotatable attachment structure be also watertight, but the attachment structure is not particularly limited and a known structure is used. A case 3 covers the entirety of the plurality of filters. The case 3 includes an outer cylindrical portion 31, a cover portion 32, and a bottom portion 33. A discharge channel 8 is connected to the bottom portion 33. Sea water, which corresponds to untreated water, flows into the case 3 through an untreated water channel 9 and an untreated water nozzle 90. The untreated water nozzle 90 extends from the untreated water channel 9 so that a nozzle opening 91 thereof is disposed in the case 3. Untreated water is ejected from the nozzle opening 91 and enters a filter-surrounding region.

A part of untreated water is filtered by the filters, and the filtered water enters inside of the cylinders of the filters. Untreated water that is not filtered and suspended particles that have settled in the case are successively discharged through the discharge channel 8 at the bottom of the case. Although valves and the like in a discharge channel are not shown in the drawings, devices that are necessary for maintenance or for adjusting flow rate may be provided. Filtered water that is filtered by the filters 1 is guided to filtered water channels 7a and 7b through water intake holes that are formed in the central pipes 4a and 4b, and flows to outside of the case.

In the present structure, the nozzle opening 91 of the untreated water nozzle 90 is oriented so that untreated water is ejected in a direction that does not intersect the outer peripheral surfaces of the filters. Therefore, it is not expected that untreated water directly impact on the surfaces of the filters and have a cleaning effect. The present structure further includes cleaning nozzles 2a and 2b for the filters 1a and 1b, respectively. The cleaning nozzles 2a and 2b extend through the outer cylindrical portion 31 of the case 3 so that nozzle openings thereof face the filter surfaces. Untreated water that has not been filtered is taken through a water intake pipe 61 that is connected to a part of the case 3, and the untreated water is used as cleaning water. A pump 63 supplies cleaning water to a cleaning water channel 6 through a circulation channel 62. It is preferable that a flowmeter 64 be disposed in a pipe and be used to control the flow rate of flow that is generated by the pump 63. The cleaning water channel 6 is connected to each of the cleaning nozzles 2a and 2b, which extend through the outer cylindrical portion 31 of the case. Each of the cleaning nozzles is oriented in such a direction cleaning water is ejected substantially in a direction to the cylindrical surfaces of the filters. Cleaning water is ejected from the nozzle openings toward the outer peripheral surfaces of the filters. Cleaning water impacts on the outer peripheral surfaces of the filters, so that the filters are cleaned.

Both of the filters 1a and 1b are rotated by a motor 100. That is, the motor 100 is disposed so that a shaft 101 thereof is coaxial with the central axis of the filters, and the motor 100 rotates the filters. Because the motor rotates the filters, it is possible to continue filtration using the entire outer peripheral surfaces of the filters while the filter surfaces are successively cleaned using cleaning water. There is an additional merit in that the rotation speed can be freely set and changed. The motor 100 is covered by a motor cover 102 and driven by electric power supplied from a driving control unit (not shown).

In the example described above, the central pipe and the filtered water channel are provided for each filter. However, each of these pipes may be a common pipe. A variation in which the cleaning water channel 6 is provided for each filter and a variation in which cleaning water nozzles are integrally formed are within the scope of the present invention.

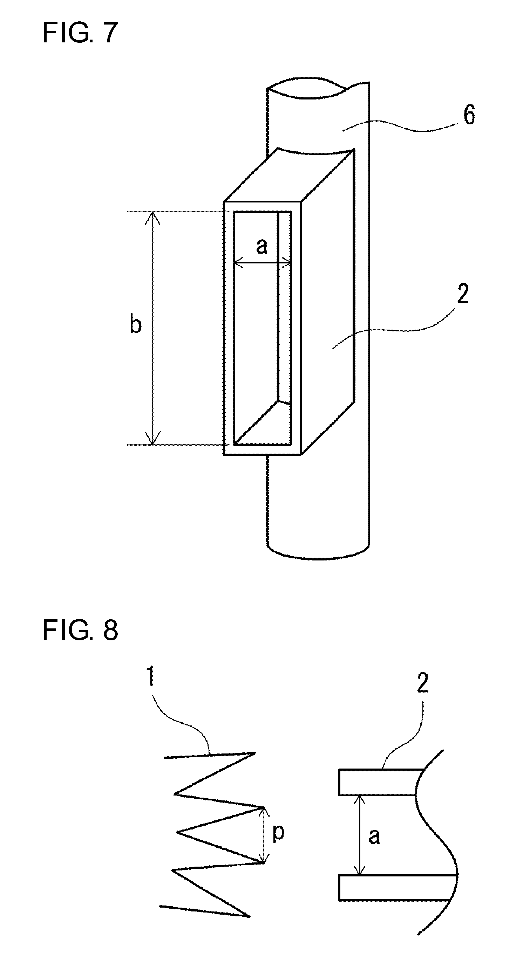

Hereinafter, an example in which the nozzle opening has an oblong shape will be described. Figure 7 shows an example of an oblong nozzle opening of a cleaning water nozzle of a ballast water treatment apparatus for a ship according to the present invention. The nozzle opening is a substantially rectangular, that is, has a short side having a length a and a long side having a length b. The length of the long side is not particularly limited. However, it is preferable that the long side have a length that is substantially equal to (within a difference of ±10% from) or greater than the length of the pleated filter in the axial direction in order to efficiently supply untreated water to the entirety of the pleated filter. Referring to Fig. 8, a preferable length of the short side will be described. Figure 8 is a schematic view showing a pleated filter and a part of a nozzle opening that is disposed so as to faces the pleated filter. It is preferable that the ratio of the short side to the pitch p of the protrusions of the pleated filter be less than or equal to three (p < 3a). It is more preferable that the ratio be less than or equal to two, and further preferably, p < a, because, in these cases, the effect of cleaning the pleated filter is increased further. The cleaning effect was examined using a filter having a pleat pitch p = 5 mm, while changing the length of the short side a of the untreated water nozzle opening. As a result, only an insufficient cleaning effect was obtained when a = 15 mm, and a significant cleaning effect was obtained when a = 8 mm. When a = 3 mm, although a cleaning effect for practical use was obtained, the result was inferior to that of a case where a = 8 mm. If an opening that has a shape having rounded corners or an generally elliptic shape is used instead of an opening having a rectangular shape, the maximum width in the axial direction of the filter shaft is regarded as the length of the long side, and the maximum width of the opening in a direction perpendicular to the long side is regarded as the length of the short side.

## Claims

1. A ballast water treatment apparatus comprising:
a filter that is cylindrically formed so as to surround an axis;
a case that includes an outer cylindrical portion that is disposed so as to surround the filter;
a rotation mechanism that rotates the filter around the axis;
an untreated water nozzle that ejects untreated water to a filter-surrounding region that is defined by an outer peripheral surface of the filter and the outer cylindrical portion;
a cleaning water nozzle that ejects cleaning water toward the outer peripheral surface of the filter;
a filtered water channel through which filtered water that has passed through the filter flows from a region inside the filter to outside of the case; and
a discharge channel through which discharged water that has not passed through the filter is discharged from the filter-surrounding region to outside of the case.

2. The ballast water treatment apparatus according to Claim 1, further comprising a water intake channel through which cleaning water is taken from the filter-surrounding region or from the discharge channel and a circulation channel through which the cleaning water is supplied to the cleaning water nozzle.

3. The ballast water treatment apparatus according to Claim 1 or 2, wherein a nozzle opening of the untreated water nozzle is oriented in such a direction that the untreated water is ejected in a direction that does not intersect the outer peripheral surface of the filter.

4. The ballast water treatment apparatus according to any one of Claims 1 to 3, wherein a nozzle opening of the cleaning water nozzle is oriented in such a direction that the cleaning water is ejected substantially in a direction to a cylindrical surface of the filter.

5. The ballast water treatment apparatus according to any one of Claims 1 to 4, wherein the filter is a pleated filter having a pleated shape that is folded in a cylinder radial direction.

6. The ballast water treatment apparatus according to any one of Claims 1 to 5, wherein a nozzle opening of the cleaning water nozzle is an oblong opening that has a long side extending in a direction of the axis.

7. The ballast water treatment apparatus according to any one of Claims 1 to 6, wherein the filter is provided in a plurality, and the plurality of filters are arranged so as to be coaxial with each other.

8. A ballast water treatment method of filtering ballast water by using the ballast water treatment apparatus according to any one of Claims 1 to 7.
